Europäisches Patentamt

European Patent Office

Office européen des brevets

(19)

(11) **EP 1 094 927 B1**

(12) **FASCICULE DE BREVET EUROPEEN**

(45) Date de publication et mention
de la délivrance du brevet:
**06.08.2003 Bulletin 2003/32**

(51) Int Cl.⁷: **B29C 49/00**, B29C 45/26,
B65D 1/02, B65D 23/10

(21) Numéro de dépôt: **00925361.8**

(22) Date de dépôt: **28.04.2000**

(86) Numéro de dépôt international:
**PCT/FR00/01165**

(87) Numéro de publication internationale:
**WO 00/067989 (16.11.2000 Gazette 2000/46)**

(54) **BOUTEILLE EN PLASTIQUE PREVUE POUR RECEVOIR UNE POIGNEE ET OUTILLAGE POUR SA FABRICATION**

PLASTIKFLASCHE VERSEHEN MIT EINER HALTERUNG FÜR EINEN GRIFF UND
VORRICHTUNG ZU SEINER HERSTELLUNG

PLASTIC BOTTLE DESIGNED TO RECEIVE A HANDLE AND EQUIPMENT FOR MAKING SAME

(84) Etats contractants désignés:
**AT BE CH CY DE DK ES FI FR GB GR IE IT LI LU
MC NL PT SE**

(30) Priorité: **07.05.1999 FR 9906040**

(43) Date de publication de la demande:
**02.05.2001 Bulletin 2001/18**

(73) Titulaire: **Perrier Vittel Management et
Technologie
92130 Issy les Moulineaux (FR)**

(72) Inventeur: **CERVENY, Jean-Paul
F-88800 Vittel (FR)**

(74) Mandataire: **Poupon, Michel
Cabinet Michel Poupon,
3 rue Ferdinand Brunot
88026 Epinal Cedex (FR)**

(56) Documents cités:
EP-A- 0 870 593          WO-A-82/02369
CA-A- 883 114            US-A- 3 100 576
US-A- 3 412 887

EP 1 094 927 B1

Printed by Jouve, 75001 PARIS (FR)

**Description**

La présente invention concerne une poignée pour bouteille en plastique et une bouteille équipée pour recevoir ladite poignée.

L'invention concerne plus particulièrement, mais non limitativement les bouteilles ou bonbonnes de grand format (capacité ) afin de faciliter leur préhension.

Les bouteilles sont formées par soufflage de préforme, elles-mêmes obtenues par injection-moulage. Les bouteilles sont formées principalement d'un corps tubulaire prolongé par un col à l'extrémité duquel se visse un bouchon. Au voisinage du pas de vis, le col de la bouteille comporte généralement une collerette annulaire conformée sur la préforme lors de l'injection-moulage.

Le matériau utilisé est du polyéthylène téréphtalate désigné dans la suite du texte par l'abréviation PET.

A l'heure actuelle, on propose sur le marché deux types de poignées à savoir :

- une poignée injectée monobloc avec la préforme de la bouteille, avec pour principaux inconvénients :

  . prix élevé (coûte 7 à 9g de PET)
  . ergonomie de transport médiocre ; la charnière en PET est rigide, l'effort de la pesanteur n'est pas dans l'axe de la bouteille,
  . poignée gênante pour les dispositifs de sur conditionnement (pack, carton),
  . moulerie gênant considérablement la pose d'un manchon thermorétractable,
  . moulerie complexe (1,5 fois plus cher)
  . temps de cycle augmenté de 20 % et productivité diminuée d'autant,
  . cycle froid non réalisé à ce jour

- une poignée en PET injectée sur le col que les fabricants proposent en standard et qui permet la pose d'un manchon thermorétractable mais :

  . elle est relativement chère (même ordre de grandeur que le prix du bouchon)
  . l'investissement du moule d'injection est élevé, la durée du cycle d'injection est importante ( le parcours de la matière est très long), la surface de chaque empreinte est importante dans le moule et oblige à utiliser une presse d'injection dont le groupe de fermeture nécessite une force importante ; la productivité est médiocre, la part d'amortissement est élevée dans le prix de la poignée ;
  . les coûts logistiques de transport de la poignée en vrac, avant l'utilisation par l'usine d'embouteillage, sont importants compte tenu de la faible densité de chargement.

Pour résoudre les problèmes de l'art antérieur, la demanderesse est allée à l'encontre des idées reçues et a cherché s'il était possible de rapporter une poignée extrudée sur des ergots conformés avec la préforme lors de l'injection-moulage.

Cette technique n'a jamais été mise en oeuvre car elle était considérée incompatible avec les techniques et les outillages de fabrication des préformes.

La demanderesse a réussi à résoudre tous les problèmes arâce à une préforme en plastique telle que décrite dans la revendication 1.

La préforme, ou la bouteille selon l'invention décrite dans la revendication 7, comporte préférentiellement deux ergots d'accrochage diamétralement opposés prévus sur son col.

Les liaisons des ergots d'accrochage sont préférentiellement dans le plan d'une collerette d'appui de la préforme ou de la bouteille.

Selon une variante de forme préférée mais non limitative, les ergots ont une forme plate allongée en haricot, avec deux extrémités en développante de cercle.

Un ensemble bouteille-poignée selon l'invention est décrit dans la revendication 13.

Pour le moulage de la préforme, on utilise un outillage tel que décrit dans la revendication 15.

On comprendra mieux l'invention à l'aide de la description qui suit faite en référence aux figures annexées suivantes :

• figure 1: vue d'une poignée selon l'invention installée sur le col d'une préforme,
• figure 2: section horizontale de cols de préformes conformes à l'invention montrant la forme des ergots d'accrochage,
• figure 3: vue de la partie supérieure d'une bouteille selon l'invention équipée d'une poignée selon l'invention et d'un manchon d'inviolabilité enveloppant le bouchon,
• figure 4 : vue en coupe d'une presse d'injection de préformes selon l'invention,
• figure 5a, 5b, 5c : vues de détail montrant le moule fermé, puis ouvert en coupe verticale puis ouvert en coupe horizontale dans le cas d'un premier type de presse classique.
• Figure 6a, 6b, 6c : vues de détail montrant le moule fermé, puis ouvert en coupe verticale puis ouvert en coupe horizontale dans le cas d'un deuxième type de presse classique.

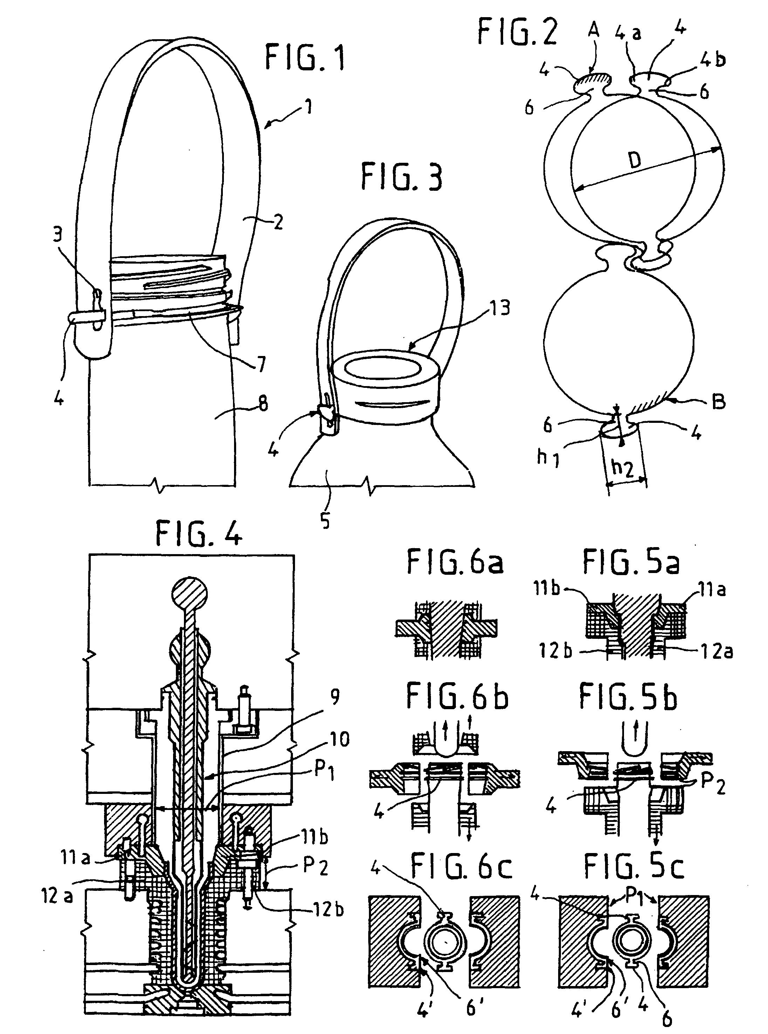

Les figures 1 et 3 montrent une poignée sangle (1) par exemple et non limitativement de type sangle extrudée de réalisation classique formée d'une sangle rectangulaire (2) souple comportant à chaque extrémité un oeillet d'accrochage (3) destiné chacun à coopérer avec un ergot d'accrochage (4) de la bouteille.

Le col de la bouteille (5) ou de la préforme (8) comporte deux ergots d'accrochage (4) diamétralement opposés disposés en dessous du pas de vis d'un bouchon (13).

Les caractéristiques des ergots résident dans leur mode de fabrication d'une part, et dans leur forme et dimensions d'autre part.

Ils sont obtenus par injection sur le col de la préforme avant la formation par soufflage de la bouteille.

Leur forme et leur positionnement sont prévus pour éviter tout risque d'accrochage des préformes entre elles. Lors des étapes ultérieures de fabrication, par exemple dans le cas d'un cycle froid, lorsque les préformes tombent en vrac dans les containers, elles ne doivent en aucun cas s'imbriquer entre elles et doivent pouvoir être orientées dans le démêleur/orienteur.

Ces ergots peuvent être indexés dans le cas d'un contenant carré ou rectangulaire.

De façon préférentielle, les liaisons (6) des ergots (4) avec le corps de la préforme sont dans le plan de la collerette d'appui (7) pour éviter conflits et accrochages entre eux ou avec les dispositifs de protection du col vis-à-vis du rayonnement dans les fours de conditionnement en température.

Les ergots (4) pourront être en forme de sphère, de demi sphère, de section plate et/ou en développante de cercle favorisant ainsi la rotation sans accrochage entre deux ergots voisins.

Sur les exemples de la figure 2, les ergots (4) ont une forme plate allongée en haricot, avec deux extrémités arrondies (4a, 4b) en développante de cercle de manière que la surface périphérique (A) d'un ergot (4) roule sans coincement sur une surface (B) d'une collerette voisine.

Pour garantir l'anti-imbrication, les dimensions $h_1$ et $h_2$ devront être judicieusement choisies pour un diamètre donné D du col, $h_1$ étant la hauteur maximale du relief de l'ergot et $h_2$ sa largeur maximate (voir figure 2).

On choisit non limitativement un rapport $\frac{h_1 + h_2}{D}$ compris entre 0,6 et 0,14 et préférentiellement voisin de 0,4.

On se rapporte à présent à la figure 4 montrant, vue en coupe verticale, une presse à injection pour le moulage d'une préforme.

Il s'agit d'une machine de type classique avec une cavité de moulage (9) définie entre un noyau (10) pour la forme intérieure du tube, une bague de collerette en deux parties (11a,11b) pour la forme extérieure du pas de vis et de la collerette, et deux plaques (12a,12b) pour la forme extérieure du tube.

L'ouverture du moule, pour le démoulage de la préforme s'effectue suivant un plan de joint vertical médian (P1) et suivant un plan de joint horizontal (P2) prévu, ici au niveau de la collerette comme le montre les figures 4, 5, 6.

Pour réaliser le plus économiquement possible les ergots selon l'invention, il faut les prévoir à l'intersection des deux plans de joint P1 et P2.

On pourra en outre modifier les outillages existantren réalisant les cavités en forme d'ergot (6',4') par enlèvement de matière.

Les vues de détail (5a,5b,5c et 6a,6b,6c) montrent les étapes d'ouverture du moule dans les deux types de presses habituellement utilisées.

Parmi les propriétés caractéristiques de l'invention on notera que :

- la poignée de type sangle extrudée coûte 3 à 4g de polyéthylène (éventuellement polyéthylène recyclé), l'investissement nécessaire à sa fabrication est très faible,
- la densité du chargement est proche de la densité de la matière (90 %), les coûts logistiques sont 10 à 15 fois inférieurs,
- l'ergonomie de transport pour le consommateur est excellente grâce à la souplesse du polyéthylène, l'effort de la pesanteur étant dans l'axe de la bouteille,
- la poignée ne gène en aucun cas les dispositifs de sur conditionnement (pack, carton),
- la poignée sangle n'interdit pas la pose d'un manchon (13) thermo rétractable à la condition que celui-ci soit perforé de deux trous qui ne gênent en rien la rétractation du manchon (figure 3),
- les ergots coûtent 1 à 1,5 g de PET, ils n'influent pas le temps de cycle d'injection, le design du moule est simple et se fait par enlèvement de matière sur des moules existants.

**Revendications**

1. Préforme en plastique comportant un col (5) destinées à la réalisation de bouteilles par soufflage, comportant une pluralité d'ergots d'accrochage (4) monobloc avec la préforme, et conformés avec ladite préforme lors de l'injection-moulage

2. Préforme selon la revendication précédente, comportant deux ergots d'accrochage (4) diamétralement opposés prévus sur son col (5).

3. Préforme selon l'une des revendications 1 à 2, dans laquelle les liaisons (6) des ergots d'accrochage (4) sont dans le plan d'une collerette d'appui (7).

4. Préforme selon l'une des revendications 1 à 3, dans laquelle les ergots ont une forme plate ailongée en haricot, avec deux extrémités arrondies (4a,4b) en développante de cercle.

5. Préforme selon l'une des revendications 1 à 4, dans laquelle le rapport $h_1 + h_2/D$ est compris entre 0,6 et 0,14.

6. Préforme selon la revendication 5, dans laquelle le rapport est de 0,4 environ.

7.  Bouteille en plastique du type réalisée par soufflage d'une préforme elle-même obtenue par injection moulage, ladite préforme comportant une pluralité d'ergots d'accrochage (4) monobloc avec la préforme, et conformés avec la dite préforme lors de l'injection moulage.

8.  Bouteille en plastique selon la revendication 7, comportant deux ergots d'accrochage (4) diamétralement opposés prévus sur son col (5).

9.  Bouteille selon la revendication 8, dans laquelle les liaisons (6) des ergots d'accrochage (4) sont dans le plan d'une collerette d'appui (7).

10. Bouteille selon l'une des revendications 8 à 9, dans laquelle les ergots ont une forme plate allongée en haricot, avec deux extrémités arrondies (4a,4b) en développante de cercle.

11. Bouteille selon l'une des revendications 8 à 10, dans laquelle le rapport $h_1 + h_2/D$ est compris entre 0,6 et 0,14.

12. Bouteille selon l'une des revendications 8 à 11, dans laquelle le rapport est de 0,4 environ.

13. Ensemble bouteille-poignée, dans lequel la bouteille est une bouteille selon l'une des revendications 8 à 12, et la poignée est une sangle rectangulaire (2) comportant à chaque extrémité un oeillet d'accrochage (3).

14. Ensemble bouteille-poignée selon la revendication 13, dans lequel la poignée est une sangle extrudée.

15. Outillage pour presse à injection pour la fabrication de préformes de bouteilles plastique, selon la revendication 1, du type comportant un plan de joint vertical P1 et un plan de joint horizontal P2, comportant des cavités en forme d'ergots situées aux intersections des plans de joints P1 et P2.

**Patentansprüche**

1.  Kunststoff -Vorfonnling mit einem Hals (5) zur Herstellung von Flaschen durch Blasen, der mehrere Einhängestifte (4) aufweist, die einstückig mit dem Vorformling ausgebildet sind und während des Spritzgießverfahrens an den genannten Vorformling angepasst werden.

2.  Vorformling nach dem vorhergehenden Anspruch, der zwei Einhängestifte (4) aufweist, die diametral gegenüberliegend auf seinem Hals (5) vorgesehen sind.

3.  Vorformling nach einem der Ansprüche 1 oder 2, bei dem die Verbindungen (6) der Einhängeatifte (4) in der Ebene eines Abstützbundes (7) liegen.

4.  Vorformling nach einem der Ansprüche 1 bis 3, bei dem die Stifte die Form einer bohnenförmig verlängerten Platte mit zwei abgerundeten, an einen Kreis anschließenden Enden (4a, 4b) aufweisen.

5.  Vorformling nach einem der Ansprüche 1 bis 4, bei dem das Verhältnis $h_1 + h_2/D$ zwischen 0,6 und 0,14 liegt.

6.  Vorformling nach Anspruch 5 bei dem das Verhältnis ungefähr 0,4 beträgt.

7.  Kunststoffflasche, die durch Blasen eines durch Spritagießverfahren erhaltenen Vorformlings hergestellt wird, der mehrere Einhängestifte (4) aufweist, die einstückig mit dem Vorformling ausgebildet sind und während des Spritzgießverfahrens an den genannten Vorformling angepasst werden.

8.  Kunststoffflasche nach Anspruch 7, die zwei Einhängestifte (4) aufweist, die diametral gegenüberliegend auf ihrem Hals (5) vorgesehen sind.

9.  Flasche nach Anspruch 8, bei der die Verbindungen (6) der Einhängestifte (4) in der Ebene eines Abstützbundes (7) liegen.

10. Flasche nach einem der Ansprüche 8 bis 9, bei der die Stifte die Form einer bohnenförmig verlängerten Platte mit zwei abgerundeten, an einen Kreis anschließenden Enden (4a, 4b) aufweisen.

11. Flasche nach einem der Ansprüche 8 bis 10, bei der das Verhältnis $h_1 + h_2/D$ zwischen 0,6 und 0,14 liegt.

12. Flasche nach Anspruch 8, bei der das Verhältnis ungefähr 0,4 beträgt.

13. Baugruppe Flasche-Griff, bei der die Flasche eine Flasche nach einem der Ansprüche 8 bis 12 ist und der Griff ein rechteckiger Gurt (2) ist, der an jedem Ende ein Einhängeauge (3) aufweist.

14. Baugruppe Flasche-Griff nach Anspruch 13, bei der der Griff ein extrudierter Gurt ist.

15. Werkzeug zum Spritzgießen für die Herstellung von Vorformlingen von Kunststoffflaschen nach Anspruch 1, mit einer vertikalen Dichtungsebene P1 und einer horizontalen Dichtungsebene P2, das Hohlräume in Form von Stiften aufweist, die in Schnittflächen der Dichtungsebenen P1 und P2 angeordnet sind.

**Claims**

1. Item preformed from plastic, which comprises a collar (5), said item being intended for producing bottles by blowing and comprising a plurality of attachment lugs (4), which are integral with the preformed item and are shaped with said preformed item during the injection moulding process.

2. Preformed item according to the preceding claim, which item comprises two diametrically opposed attachment lugs (4) provided on its collar (5).

3. Preformed item according to one of claims 1 to 2, in which the connections (6) of the attachment lugs (4) are in the plane of a small support flange (7).

4. Preformed item according to one of claims 1 to 3, in which the lugs have a flat, elongate, bean-shaped configuration, with two rounded ends (4a, 4b) beginning to form a circle.

5. Preformed item according to one of claims 1 to 4, in which the ratio $h_1 + h_2/D$ is between 0.6 and 0.14.

6. Preformed item according to claim 5, in which the ratio is about 0.4.

7. Bottle formed from plastic, of the type produced by blowing a preformed item which is itself produced by injection moulding, said preformed item comprising a plurality of attachment lugs (4), which are integral with the preformed item and are shaped with said preformed item during the injection moulding process.

8. Bottle formed from plastic according to claim 7, which bottle comprises two diametrically opposed attachment lugs (4) provided on its collar (5).

9. Bottle according to claim 8, in which the connections (6) of the attachment lugs (4) are in the plane of a small support flange (7).

10. Bottle according to one of claims 8 to 9, in which the lugs have a flat, elongate, bean-shaped configuration, with two rounded ends (4a, 4b) beginning to form a circle.

11. Bottle according to one of claims 8 to 10, in which the ratio $h_1 + h_2/D$ is between 0.6 and 0.14.

12. Bottle according to one of claims 8 to 11, in which the ratio is about 0.4.

13. Bottle-and-handle assembly, in which the bottle is a bottle according to one of claims 8 to 12, and the handle is a rectangular strap (2) which comprises, at each end, an attachment eyelet (3).

14. Bottle-and-handle assembly according to claim 13, in which the handle is an extruded strap.

15. Equipment for an injection-moulding press for manufacturing preformed plastic bottles according to claim 1, of the type comprising a vertical junction-plane P1 and a horizontal junction-plane P2, and comprising cavities in the form of lugs situated at the intersections of the junction-planes P1 and P2.

FIG. 1

FIG. 3

FIG. 2

FIG. 4

FIG.6a  FIG.5a

FIG.6b  FIG.5b

FIG.6c  FIG.5c